# EUROPEAN PATENT APPLICATION

(11) **EP 3 961 971 A1**
(43) Date of publication of application: **02.03.2022**
(21) Application number: 20192819.9
(22) Date of filing: 26.08.2020
(51) Int. Cl.: H04L 9/00, G09C 1/02

(54) **A METHOD FOR TRANSMITTING DATA BETWEEN AN INDUSTRIAL DEVICE AND A SERVICE DEVICE**

(71) Applicant: Siemens Aktiengesellschaft, 80333 München (DE)
(72) Inventor: Klawun, Christoph, Cypress, OK 77433 (US); Wang, Aosheng, Eden Prairie, MN 55344 (US)

(57) **Abstract**

The current disclosure describes a method of transmitting industrial data from an industrial device in an industrial facility to a service device. The method comprises determining one or more text tokens in the industrial data, based on one or more labels associated with the industrial data, generating a replacement token for each token from the one or more text tokens, modifying the industrial data for transmission by replacing each text token from the one or more text tokens with the corresponding replacement token, and transmitting the modified industrial data to the service device. At least one text token from the one or more text tokens in the industrial data, is indicative of a process parameter associated with a process in the industrial facility.

## Description

The current disclosure relates to industrial devices in industrial facilities and more particularly, to gas analyzers and gas chromatographs in industrial facilities. Gas analyzers are used in industrial facilities for detecting presence and concentration of chemicals in a sample from particular sections or processes in the industrial facility. To ensure proper operation, chemical analyzers need to be maintained periodically, including configuration and calibration. Accordingly, regular service operations are performed on gas analyzers.

The current disclosure relates to industrial devices and more particularly, gas analyzers in industrial facility. Gas analyzers often store industrial data such as analyzer configurations, analytical results of the products or processes being monitored by the analyzers. This industrial data may contain sensitive business information that could pose a risk if discovered by a competitor or the general public. However, for performing service operations, this data may be required by analyzer manufacturers and service providers.

Analyzer manufacturers and service providers often need access to the data stored on the analyzer, for providing services to help customers to maintain the analyzer and to diagnose potential analyzer problems. However, because of the sensitive nature of the data contained in the analyzer, it may be challenging to perform analyzer maintenances or diagnosis effectively without exposing this sensitive data. Accordingly, there is a need for a method and device that addresses the above mentioned issue.

Accordingly, the current disclosure describes method accordingly to claim 1, an industrial device according to claim 5, and a non-transitory storage medium according to claim 9 which address the above-mentioned aspects.

Accordingly, in an aspect, the current disclosure describes a method of transmitting industrial data from an industrial device in an industrial facility to a service device. The method comprises determining one or more text tokens in the industrial data based on one or more labels associated with the industrial data, generating a replacement token for each token from the one or more text tokens, modifying the industrial data for transmission by replacing each text token from the one or more text tokens with the corresponding replacement token, and transmitting the modified industrial data to the service device. At least one text token from the one or more text tokens in the industrial data, is indicative of a process parameter associated with a process in the industrial facility.

Accordingly, the current disclosure provides a method of transmitting sensitive data to service devices in a secure fashion. By replacing text tokens in the industrial data with replacement tokens, sensitive business information is removed from the industrial data prior to sharing the data with the service providers. By desensitizing or scrubbing the data, the industrial data can be shared with service providers, thereby allowing for efficient service operations to be performed by the service providers.

In an example, the industrial device is connected to a plant network of the industrial facility. In an example, the method further comprises determining a network associated with the service device, based on a request from the service device. Accordingly, the industrial device can selectively determine the data to be scrubbed or not based on the network on which the service device is present.

In an example, the process parameter associated with the process in the industrial facility includes one of an input stream to the industrial device, and a chemical detected by the industrial device.

In an example, the method further comprises receiving data from the service device, the data comprising one or more replacement tokens and replacing each replacement token in the data from the service device with a corresponding text token, from the one or more text tokens. Accordingly, the current disclosure enables desensitised data from the service device to be modified to include the original text tokens to make the data relevant to the industrial device.

In another aspect, the current disclosure describes an industrial device comprising: a network interface for transmitting and receiving data, and one or more processors connected to a memory module. The network interface comprises a first port capable of connecting to one or more devices of a plant network of the industrial facility and a second port capable of connecting to a service device of a remote network. The one or more processors are configured to receive a request for industrial data stored on the memory module, determine a port associated with the receipt of the request for industrial data, modify the industrial data based on the determined port, and transmit the industrial data, in response to the request. Modifying the industrial data comprises determining one or more text tokens in the industrial data, based on one or more labels associated with the industrial data, generating a replacement token for each token from the one or more text tokens, and replacing each text token from the one or more text tokens with the corresponding replacement token.

In an example, the industrial device is a gas analyzer for detecting one or more chemicals associated with a process in the industrial facility.

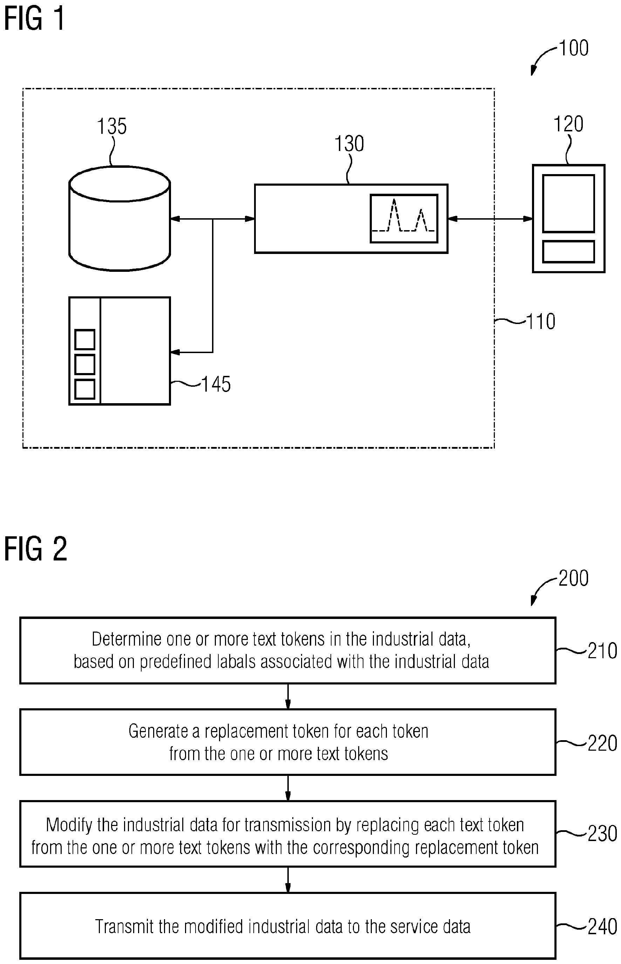

In yet another aspect, the current disclosure describes a non transitory storage medium for transmitting industrial data from a gas analyzer in an industrial facility to a service device. The non transitory storage medium comprises a plurality of instructions which when executed by one or more processors, cause the one or more processors to determine one or more text tokens in the industrial data, based on one or more labels associated with the industrial data, generate a replacement token for each token from the one or more text tokens, modify the industrial data for transmission by replacing each text token from the one or more text tokens with the corresponding replacement token, and transmit the modified industrial data to the service device. The advantages of the methods apply to the devices described herein. These aspects are further described in relation figures 1-7.

The following detailed description references the drawings, wherein:
Figure 1 illustrates a gas analyzer in a section of the industrial facility, connected to a service device;
Figure 2 illustrates an example method of transmitting industrial data to the service device;
Figure 3 illustrates a section of an example configuration file of a gas analyzer prior to data desensitization;
Figure 4 illustrates an example configuration file of a gas analyzer subsequent to data desensitization;
Figure 5 illustrates an example chromatogram of a gas analyzer prior to data desensitization;
Figure 6 illustrates an example chromatogram of a gas analyzer subsequent to data desensitization;
Figure 7 illustrates an example industrial device for transmitting industrial data to a service device; and
Figure 8 illustrates example industrial data modified for communication between an example industrial device and an example service device.

Figure 1 illustrates a gas analyzer 130 in a section 110 of an industrial facility. Industrial facility herein refers to any environment where one or more industrial processes such as manufacturing, refining, smelting, assembly of equipment may take place and includes process plants, oil refineries, automobile factories, warehouses, medical facilities, laboratories, etc. The industrial facility includes a plurality of industrial devices and subsystems such as control devices, field devices, operator stations, process historians, etc. Operator stations display the status of the industrial plant to an operator and for allowing the operator to define setpoints for the control of the industrial processes in the facility. Control devices includes process controllers, programmable logic controllers, supervisory controllers, automated guidance vehicles, robots, operator devices, etc. The control devices may be connected to each other via a plant network (realized via wired and wireless networks). Control devices are connected to a plurality of field devices (not shown in figure) such as actuators and sensor devices for monitoring and controlling industrial processes in the industrial facility. These field devices can include flowmeters, value actuators, temperature sensors, pressure sensors, etc. One such field device is the gas analyzer 130.

The gas analyzer 130 is communicatively coupled to a controller 145 and a process historian 135. The gas analyzer 130 is configured to receive a gas sample from a process in the industrial facility and detect presence and concentration of one or more chemicals in the gas sample. The result of the analysis is transmitted to the controller 145 and the process historian 135. The controller 145 is configured to control one or more equipment associated with the process in the industrial facility based on the result of the analysis from the gas analyzer 130. The process historian is configured to store the result of the analysis. In an example, the controller 145, process historian 135 are connected the gas analyzer 130 via the plant network.

Additionally, the gas analyzer 130 is capable of connecting to a service device 120. The service device 120 is configured to retrieve data from the gas analyzer 130 to determine the condition of gas analyzer 130 and calibrate or configure the parameters of the gas analyzer 130 to ensure that the gas analyzer 130 continues to operate properly. In an example, the service device 120 is located within the section 110 of the industrial facility and connects to the gas analyzer 130 directly. In another example, the service device 120 is outside the industrial facility and connects to the gas analyzer 130 via a remote network. The gas analyzer 130 is configured to desensitize or scrub the data and transmit the desensitized or scrubbed data to the service device 120. This is further explained in reference to figure 2.

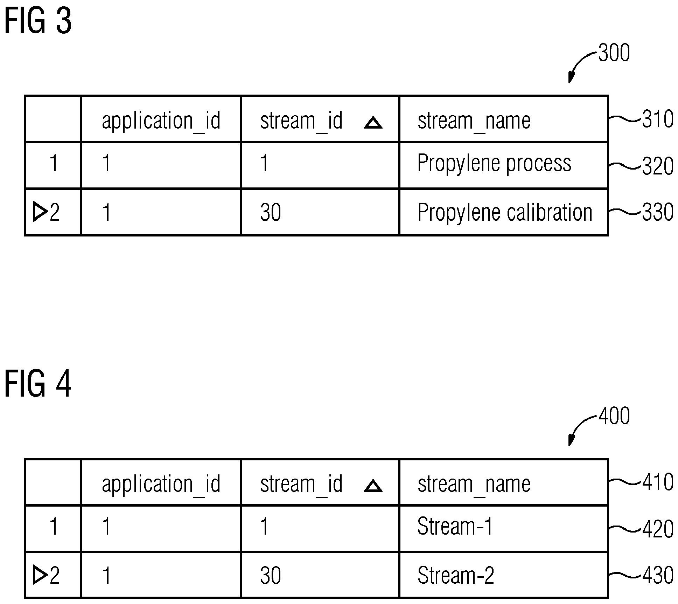

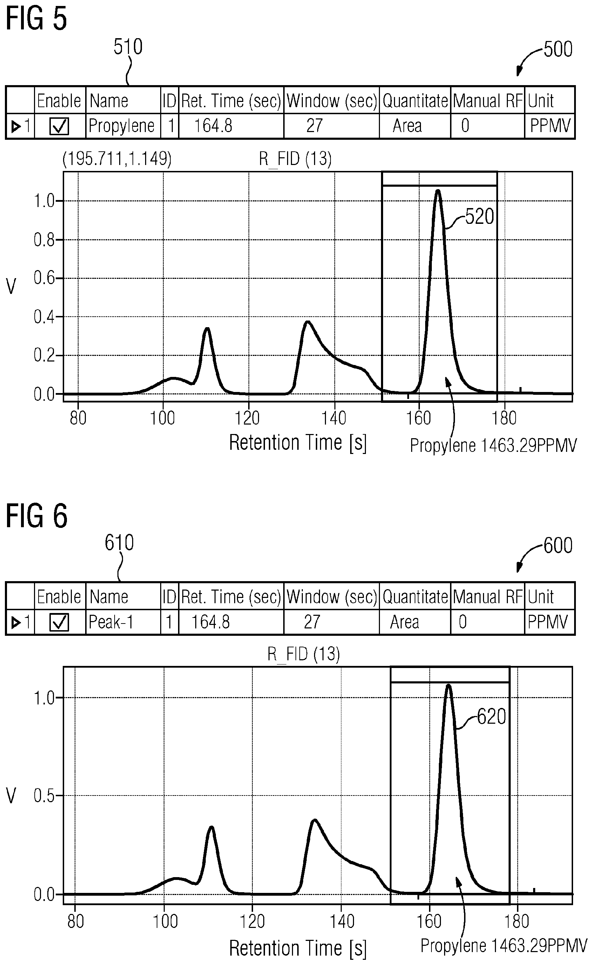

Figure 2 illustrates a method 200 of transmitting industrial data from the gas analyzer 130 in the industrial facility to the service device 120. Industrial data stored on the gas analyzer 130 may include data about streams, methods, chromatograms, chemicals, and other objects that may contain sensitive texts related to customer businesses. In an example, the method 200 is performed by the gas analyzer 130. The method 200 is executed upon receiving a request for industrial data from the service device 120. At step 210, the gas analyzer 130 determines one or more text tokens in the industrial data, based on one or more labels associated with the industrial data. Text token herein refers to a set of one or more characters delimited by break characters (such as space character or tab character or end of string character). Example of text token includes names of chemicals, names of processes, etc. label herein refers to a descriptor associated with a section of the industrial data. For example, labels may include input stream label, chromatogram label, method label, etc. The industrial data stored on the gas analyzer 130 includes a plurality of labels and one or more labels may be selected for data scrubbing or data desensitization (i.e. removal of sensitive information). The one or more labels from the plurality of bales may be selected based on user input or from a network associated with the service device. Similarly, the text tokens in the industrial data, are indicative of process parameters associated with a process in the industrial facility. For example, the text tokens may indicate the chemical output from a manufacturing process which is detected and analyzed by the gas analyzer. It may be noted that process in the industrial facility includes the gas analyzer and the operation performed by the gas analyzer for the regulation of the process. Accordingly, process parameters associated with a process in the industrial facility include an input stream to the gas analyser from the process in order to evaluate the quality of the output of the process, and a chemical detected by the gas analyser, etc. Process parameter herein refers to any value or data associated with a process in the industrial facility including measurement, monitoring and control of the process. This is further explained using examples shown in figure 3 and figure 5.

Figure 3 illustrates a section 300 of an example configuration file of the gas analyzer 130 prior to data desensitization. Configuration file is the industrial data stored on the gas analyzer 130 and requested by the service device 120. As shown in the figure, the configuration file is in a tabular format and comprises of a plurality of columns, each column comprising a label and a plurality of values.

A shown in the figure, column 310 includes a label 320 'Stream_name' and comprises two values Propylene process' 320, Propylene Calibration' 330. 'Stream_name' is indicative of the streams from which the samples are taken for the gas analyzer 130. For example, the first stream name Propylene process' 320 specifies that a sample is taken from a propylene process in the industrial facility. Similarly, the second stream name Propylene calibration' 330 specifies that a sample is taken from a propylene gas tank in the industrial facility for calibrating the gas analyzer 130.

In an example, the step 210 is performed by the gas analyzer 130 in relation to the section 300 of the example configuration file. Based on the label 'Stream_name', the gas analyzer 130 detects the text tokens Propylene process' and Propylene calibration' since these are the text characters in the column associated with the label 'Stream_name'.

Similarly, figure 5 illustrates an example chromatogram 500 generated by the gas analyzer 130. The chromatogram comprises of a plurality of peaks and includes labels for the peaks. As shown in the figure, propylene is detected in the analysis based on the peak and is shown in section 520 of the chromatogram 500. Accordingly, propylene is listed in a column of a result table in the cell 510. The column has the label name. When the step 210 is performed by the gas analyzer 130 in relation to the chromatogram 500, based on the label 'peak', and 'name', the gas analyzer 130 detects the text token 'Propylene' in the result table and in the section 520.

Then, at step 220, the gas analyzer 130 generates a replacement token for each token from the one or more text tokens. In an example, the gas analyzer 130 generates the replacement token by using the label and a sequentially generated number. Continuing the example using figure 3, for the text tokens Propylene process' and Propylene calibration', the gas analyzer 130 generates replacement token Stream-1' and 'Stream-2' respectively using the label 'Stream_name'.

Similarly, continuing the example using figure 5, for the text token 'Propylene' in section 520 and cell 510 the gas analyzer 130 generates replacement token 'Peak-1' using the label 'Peak'.

Then, at step 230, the gas analyzer 130 modifies the industrial data for transmission by replacing each text token from the one or more text tokens with the corresponding replacement token. Continuing the example using figure 3, the gas analyzer 130 replaces the text tokens Propylene process' and Propylene calibration' with the replacement tokens 'Stream-1' and 'Stream-2' respectively. Accordingly, the modified section is shown in figure 4. Figure 4 shows the modified section 400 where for the column with the label 410 'Stream_name', the values after scrubbing are 'Stream_1' 420 and 'Stream_2' 430.

Similarly, continuing the example using figure 5, the gas analyzer 130 replaces the text token 'Propylene' in section 520 and cell 510 with replacement token 'Peak-1'. Accordingly, the modified chromatogram is shown in figure 6. Figure 6 shows the modified chromatogram 600 where the text token 'Propylene' has been replaced with replacement token 'Peak-1' in section 620 and cell 610.

Then at step 240, the gas analyzer 130 transmits the modified industrial data to the service device 120. Accordingly, the industrial data sent to service device 120 does not contain text tokens which are indicative of sensitive business information which need not be disclosed to the service provider.

In an example, the method 200 further comprises determining, by the gas analyser 130 a network associated with the service device 120, based on the request from the service device 120. In the example, the gas analyser 130 is configured to determine if the service device is connected to a remote network, plant network or is directly connected to the gas analyser. In the example, based on the network two which the service device 120 is connected, the one or more labels of the industrial data are selected for data desensitization or data scrubbing. For example, if the service device 120 is connected to the remote network, labels 'stream name' and 'Peak' are selected for data desensitisation. Similarly, if the service device 120 is connected to the plant network, label 'Peak' is selected for data desensitisation.

The present disclosure can take a form of a computer program product comprising program modules accessible from computer-usable or computer-readable medium storing program code for use by or in connection with one or more computers, processing units, or instruction execution system. For example, the methods 200 may be realized across one or more devices. Additionally, it may be noted that while the above method is explained in reference to a gas analyzer, it may be performed by any industrial device which communicate with a service device. For example, such industrial devices can include process controllers, gateway device, field device, etc.

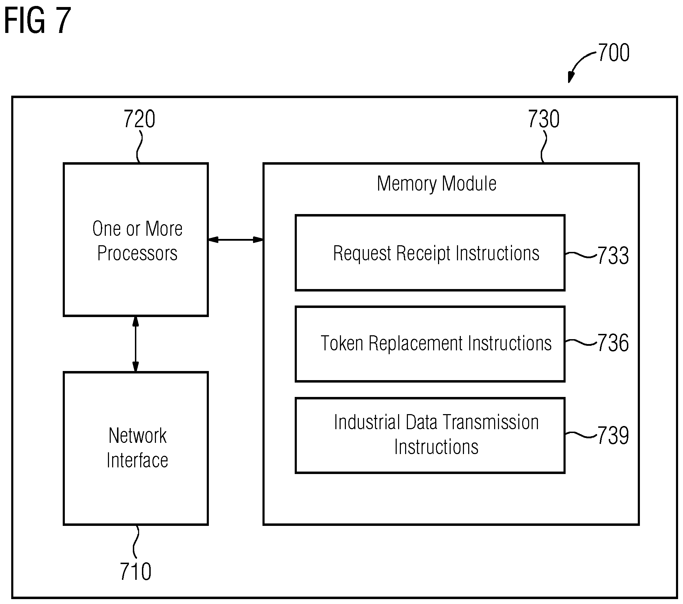

Accordingly, the current disclosure describes an industrial device 700 in an industrial facility, shown in figure 7. The industrial device 700 comprises a network interface 710. The network interface 710 comprises a first port capable of connecting to one or more devices connected to the plant network of the industrial facility and a second port capable of connecting to a service device 130. The first and second ports may be physical ports or logical ports implemented in the software of the industrial device 700.

The industrial device 700 further comprises one or more processors 720 configured to execute a plurality of instructions (733, 736 and 739) stored on the memory module or non transitory storage medium 730.

Upon execution of the request receipt instructions 733, the one or more processors 520 are configured to receive a request for industrial data stored on the memory module 730 and determine a port associated with the receipt of the request for industrial data. Then based on the port on which the request is received, the token replacement instructions 736 are either executed or not. In a first example, the request is received on the first port and since the first port is for devices connected on the plant network, the token replacement instructions 736 are not executed. In another example, the request is received on the second port and since the second port is for the service device, the token replacement instructions 736 are executed. When the token replacement instructions 736, the one or more processors 720 are configured to determine one or more text tokens in the industrial data, based on one or more labels associated with the industrial data, generate a replacement token for each token from the one or more text tokens, and replace each text token from the one or more text tokens with the corresponding replacement token. Upon execution of the industrial data transmission instructions 739, the one or more processors 720 are configured to transmit the industrial data, in response to the request.

For the purpose of this description, a computer-usable or computer-readable non-transitory storage medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processing units and program code for implementing each aspect of the technology can be centralized or distributed (or a combination thereof) as known to those skilled in the art.

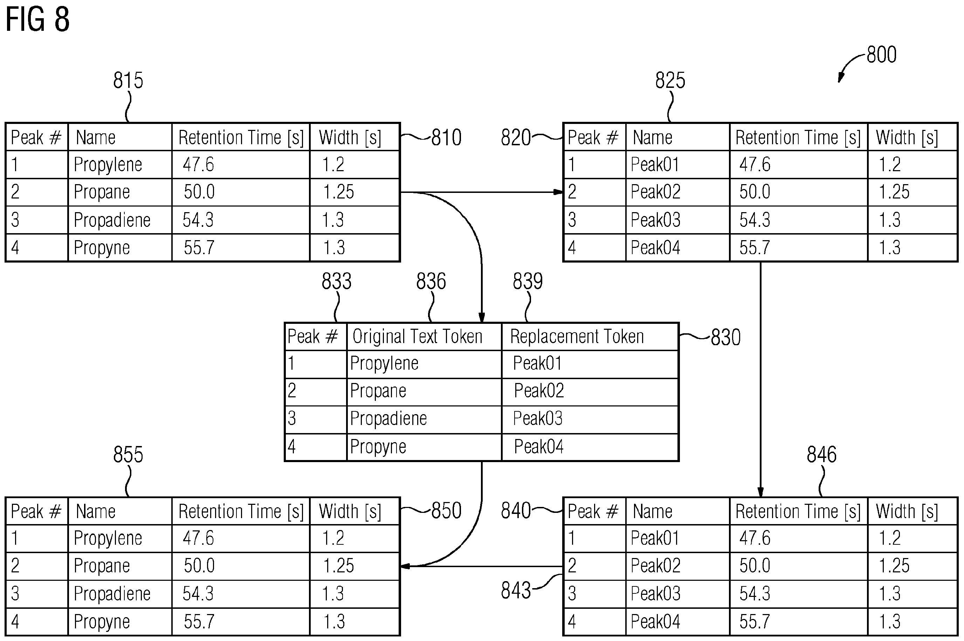

It may be noted that while the above techniques are described in relation transmission of data from an industrial device to a service device, the current disclosure also provides for repopulating de-sensitized data from the service device using the original text tokens. This is further explained using figure 8.

Figure 8 illustrates example industrial data modified for communication between an example industrial device and an example service device (not shown in figures). Table 810 illustrates industrial data stored on the industrial device and is intended to be transmitted to the service device. The column 'Name' is selected for desensitization and accordingly, based on the above described method, the industrial device generates modified industrial data (table 820) where each text token in the column 'Name' is replaced with replacement tokens. As shown in the figure, for the first peak, Propylene is replaced with Peak01. Similarly, for the second peak, Propane is replaced with Peak02. Similarly, for the third peak, Propadiene is replaced with Peak03. Similarly, for the fourth peak, Propyne is replaced with Peak04.

In addition to the replacement, the industrial device retains the mapping of the text tokens to the replacement tokens against the corresponding peak in a log file 830. As shown in log file 830, for each peak the original text token and the corresponding replacement token are mapped and stored.

Accordingly, the modified industrial data (As shown in table 820) is transmitted to the service device. In the current example, the service device modifies certain sections of the industrial data to make some corrections. For example, the corrected industrial data is shown in table 840, where the width of the second peak is changed from 1.25 to 1.2 (in cell 843). Similarly, the retention time of fourth peak is changed from 55.7 to 56.1 (in cell 846). This corrected industrial data is then transmitted back to the industrial device.

Upon receiving the corrected industrial data (840), the industrial device is configured to replace each replacement token in the data from the service device with a corresponding text token, from the one or more text tokens using the log file 830. Accordingly, by doing so the sensitized industrial data 850 is generated where the column 'Name' 855 contains all the original text tokens. Accordingly, the industrial device is capable of recontextualizing the desensitized data from the service device.

While the current disclosure is described with references to few industrial devices, a plurality of industrial devices may be utilized in the context of the current disclosure. While the present disclosure has been described in detail with reference to certain embodiments, it should be appreciated that the present disclosure is not limited to those embodiments. In view of the present disclosure, many modifications and variations would be present themselves, to those skilled in the art without departing from the scope of the various embodiments of the present disclosure, as described herein. The scope of the present disclosure is, therefore, indicated by the following claims rather than by the foregoing description. All changes, modifications, and variations coming within the meaning and range of equivalency of the claims are to be considered within their scope. All advantageous embodiments claimed in method claims may also be applied to device/non transitory storage medium claims.

## Claims

1. A method (200) of transmitting industrial data from an industrial device (130) in an industrial facility to a service device (120), the method (120) comprising:
a. determining (210) one or more text tokens in the industrial data, based on one or more labels associated with the industrial data;
b. generating (220) a replacement token for each token from the one or more text tokens;
c. modifying (230) the industrial data for transmission by replacing each text token from the one or more text tokens with the corresponding replacement token; and
d. transmitting (240) the modified industrial data to the service device (120);
wherein at least one text token from the one or more text tokens in the industrial data, is indicative of a process parameter associated with a process in the industrial facility.

2. The method (200) as claimed in claim 1, wherein the industrial device (130) is a gas analyser.

3. The method (200) as claimed in claim 1, wherein the industrial device (130) is connected to a plant network of the industrial facility.

4. The method (200) as claimed in claim 1, wherein the method (200) further comprises determining a network associated with the service device (120), based on a request from the service device (120).

5. The method (200) as claimed in claim 1, wherein the process parameter associated with the process in the industrial facility includes one of an input stream to the industrial device (130), and a chemical detected by the industrial device (130).

6. The method (200) as claimed in claim 1, wherein the method (200) further comprises
a. receiving data from the service device (120), the data comprising one or more replacement tokens; and
b. replacing each replacement token in the data from the service device (120) with a corresponding text token, from the one or more text tokens.

7. An industrial device (700) in an industrial facility, comprising:
a. a network interface (710) for transmitting and receiving data, the network interface (710) comprising:
i. a first port capable of connecting to one or more devices (145) of a plant network of the industrial facility; and
ii. a second port capable of connecting to a service device (120) of a remote network;
b. one or more processors (720) connected to a memory module (730), the one or more processors (730) configured to:
i. receive a request for industrial data stored on the memory module (730);
ii. determine a port associated with the receipt of the request for industrial data;
iii. modify the industrial data based on the determined port, wherein modifying the industrial data comprises:
a. determining one or more text tokens in the industrial data, based on one or more labels associated with the industrial data;
b. generating a replacement token for each token from the one or more text tokens; and
c. replacing each text token from the one or more text tokens with the corresponding replacement token; and
iv. transmit the industrial data, in response to the request.

8. The industrial device (700) as claimed in claim 7, wherein the industrial device (700) is a gas analyser for detecting one or more chemicals associated with a process in the industrial facility.

9. The industrial device (700) as claimed in claim 7, wherein at least one text token from the one or more text tokens in the industrial data, is indicative of a process parameter associated with a process in the industrial facility.

10. The industrial device (700) as claimed in claim 7, wherein the process parameter associated with the process in the industrial facility includes one of an input stream to a gas analyser, and a chemical detected by a gas analyser.

11. A non transitory storage medium (730) for transmitting industrial data from a gas analyser (130) in an industrial facility to a service device (120), the non transitory storage medium (730) comprising a plurality of instructions (733, 736, 739) which when executed by one or more processors (720), cause the one or more processors (720):
a. determine one or more text tokens in the industrial data, based on one or more labels associated with the industrial data;
b. generate a replacement token for each token from the one or more text tokens;
c. modify the industrial data for transmission by replacing each text token from the one or more text tokens with the corresponding replacement token; and
d. transmit the modified industrial data to the service device (120);
wherein at least one text token from the one or more text tokens in the industrial data, is indicative of a process parameter associated with a process in the industrial facility.
